# EUROPÄISCHE PATENTANMELDUNG

(11) **EP 1 106 882 A2**
(43) Veröffentlichungstag der Anmeldung: **13.06.2001**
(21) Anmeldenummer: 00126782.2
(22) Anmeldetag: 06.12.2000
(51) Int. Cl.: F16K 31/00

(54) **Piezoelektrisch betätigbares Ventil**

(30) Priorität: 09.12.1999 DE 19959341; 21.12.1999 DE 19961736
(71) Anmelder: Drei-S-Werk Präzisionswerkzeuge GmbH & Co. Fertigungs-KG, 91126 Schwabach (DE)
(72) Erfinder: Itzhaky, Itzhak, Plainview, New York 11803 (US)
(74) Vertreter: Tergau & Pohl Patentanwälte

(57) **Zusammenfassung**

Bei einem piezoelektrisch betätigbaren Ventil (1) mit mindestens einem Ventilkanal (4,5), der mittels eines an einem piezoelektrischen Biegewandler (7,8) gehaltenen Dichtelement (14,16) verschließbar ist, ist zur Erhöhung der Dichtwirkung des geschlossenen oder zu schließenden Ventilkanals (4,5) der Biegewandler (7,8) beidendseitig im Ventilgehäuse (2) gehalten. Dabei ist ein erstes Ende (7a,8a) des Biegewandlers (7,8) im Ventilgehäuse (2) fixiert, während das zweite Ende (7b,8b) auf der gegenüberliegenden Gehäuseseite (2b) in einer Gehäusenut (11) in Wandlerlängsrichtung (12) beweglich geführt ist.

## Beschreibung

Die Erfindung bezieht sich auf ein piezoelektrisch betätigbares Ventil mit mindestens einem Ventilkanal, der mittels eines an einem piezoelektrischen Biegewandler gehaltenen Dichtelementes verschließbar ist.

Aus der DE 36 08 550 A1 ist ein piezoelektrisch betätigbares Ventil bekannt, in dessen Ventilgehäuse mindestens drei Ventilkanäle zur Bildung eines Drei-Wege-Ventils einmünden. Das als Pneumatik- oder Hydraulikventil verwendbare Ventil weist innerhalb dessen Ventilgehäuses mindestens einen piezoelektrischen Biegewandler auf, dessen Anschlussende zum Anschließen einer elektrischen Spannungsquelle in einer Gehäuseschmalseite fixiert ist. Das in den Gehäuseinnenraum hineinragende Freiende des Biegewandlers trägt auf dessen dem jeweiligen Ventilkanal zugewandten Seite ein Dichtelement zum Verschließen dieses Ventilkanals.

Um in einem Ausgangs- oder Ruhezustand bei einem geöffneten Ablaufkanal einen diesem gegenüberliegenden Zulaufkanal zu verschließen, ist der entsprechende Biegewandler mechanisch vorgespannt und/oder mittels Federkraft gegen den Ventilsitz des Zulaufkanals gedrückt. Der gegenüberliegende Ablaufkanal ist in diesem Zustand dadurch geöffnet, dass ein von demselben oder von einem weiteren anschlussseitig im Gehäuse fixierten Biegewandler gehaltenes Dichtelement dem Ventilsitz des Ablaufkanals beabstandet gegenübersteht.

Im Betriebszustand ist das Anschlussende des oder jedes Biegewandlers an eine Spannungsquelle angeschlossen, wobei je nach Polung das Freiende des Biegewandlers in Richtung auf den jeweiligen Ventilkanal oder in entgegengesetzter Richtung ausgelenkt wird. Dadurch verschließt das mit dem Freiende des Biegewandlers mitbewegte Dichtelement den Ablaufkanal bei gleichzeitigem Öffnen des Zulaufkanals. Dadurch wird ein über den Zulaufkanal in das Ventilgehäuse einströmendes Medium über einen Arbeitskanal abgeführt, während im Ruhezustand bei geschlossenem Zulaufkanal ein über den Arbeitskanal einströmendes Medium über den Ablaufkanal aus dem Ventilgehäuse herausströmt.

Bei diesem bekannten piezoelektrisch betätigten Ventil besteht insbesondere unter extremen Betriebsbedingungen das Problem einer nicht ausreichenden Dichtigkeit des je nach Betriebszustand geschlossenen Ventilkanals. So können bei einem mit hohem Druck und/oder hoher Strömungsgeschwindigkeit über das Ventil geführten Medium unerwünscht hohe Leckraten infolge einer unzureichenden Abdichtung insbesondere des im Ruhezustand geöffneten und mittels des erregten Biegewandlers zu schließenden Ventilkanals auftreten.

Ein aus der US 5,630,440 bekanntes piezoelektrisch betätigtes Ventil weist einen beidendseitig im Gehäuse eingeklemmten und somit mit dessen beiden Enden fixierten Biegewandler auf. Dadurch wird gegenüber einer Fixierung lediglich eines Endes des Biegewanbdlers zwar eine vergleichsweise hohe Rückstell- oder Arbeitskraft erzielt. Allerdings hat die beidendseitige Fixierung des Biegewandlers den erheblichen Nachteil eines nur geringen und daher in der Regel unzureichenden Auslenkungsweges oder Biegungshubs.

Der Erfindung liegt daher die Aufgabe zugrunde, ein piezoelektrisches Ventil, insbesondere ein Pneumatikventil, anzugeben, bei dem unter Vermeidung der genannten Nachteile der zu sperrende Ventilkanal zuverlässig verschlossen wird.

Diese Aufgabe wird erfindungsgemäß gelöst durch die Merkmale des Anspruchs 1. Dazu ist das dem fixierten ersten Ende gegenüberliegnde zweite Ende des Biegewandlers in einer im Ventilgehäuse vorgesehenen Längsnut geführt. Diese Führung und die dadurch erzielte Beweglichkeit des Biegewandlers im erregten Zustand ermöglicht eine Längsbewegung des Biegewandlers, während eine seitliche Bewegung des Freiendes dadurch verhindert ist, dass bei einer Anregung des Biegewandlers die Nutseitenwände beidseitige Anschläge für das Freiende bilden.

Dabei ist zweckmäßigerweise das fixierte Ende als mit einer elektrischen Spannungsquelle verbindbares Anschlussende zur Ventilbetätigung ausgeführt.

Die Erfindung geht dabei von der Überlegung aus, dass ein zuverlässiges Verschließen des zu sperrenden und somit jeweils deaktivierten Ventilkanals auch unter extremen Betriebsbedingungen, insbesondere bei einem hohen Druck und einer hohen Strömungsgeschwindigkeit eines zu steuernden Mediumflusses, durch Erhöhung der Kraft bei gleichzeitig möglichst großem Auslenkungsweg bzw. Biegehub erreicht werden kann. Diese erhöhte Andruck- oder Anpresskraft, mit der das Dichtelement mittels des jeweiligen Biegewandlers gegen den Ventilsitz des entsprechenden Ventilkanals gepresst oder gedrückt wird, kann bei gleichzeitig ausreichendem Auslenkungsweg durch den Biegewandler selbst erzeugt werden, wenn dieser innerhalb des Ventilgehäuses beidendseitig gehalten und dabei lediglich an einem Ende fixiert ist, während das andere Ende nach Art eines Widerlagers lediglich unterstützt wird. Dadurch wird eine Verbesserung des Betriebsverhaltens des Biegewandlers und insgesamt eine Erhöhung der Betriebssicherheit des Ventils erzielt.

Die Erfindung geht dabei von der Erkenntnis aus, dass bei gegebener Anschlussoder Betriebsspannung und demzufolge bei konstantem Biegemoment des piezoelektrischen Wandlers die von diesem erzeugte Kraft mit abnehmendem Hebelarm zunimmt. Wird somit der Biegewandler beidendseitig gehalten, so ist die infolge einer Ausbiegung des Biegewandlers vom Dichtelement auf den Ventilsitz des entsprechenden Ventilkanals ausgeübte Anpresskraft im Vergleich zu einem einseitig eingespannten und freiendseitig freibeweglichen Biegewandler deutlich größer. Wird dabei eines der Enden des Biegewandlers axialbeweglich geführt, so ist gleichzeitig der Auslenkungsweg größer als bei einem beidendseitig fixierten Biegewandler. Daher ist es zweckmäßig, das Dichtelement im mittleren Bereich des Biegewandlers, vozugsweise mit zumindest annähernd gleichem Abstand sowohl zum fixierten als auch zum beweglich geführten Ende, anzuordnen.

Um bereits im Ausgangs- oder Ruhezustand ein zuverlässiges Verschließen eines Ventilkanals in besonders einfacher und wirkungsvoller Art und Weise zu erzielen, ist der Biegewandler in vorteilhafter Ausgestaltung im spannungslosen Zustand in Richtung auf diesen Ventilkanal konkav gebogen. Der Biegungsverlauf des Biegewandlers im spannungslosen oder erregungsfreien Ruhezustand wird zweckmäßigerweise dadurch erreicht, dass der Biegewandler selbst blattfederartig vorgespannt ist. Eine derartige Vorspannung wiederum wird zweckmäßigerweise durch ein geeignetes Herstellungsverfahren erreicht. Dabei wird von einem lamellierten Biegewandler mit einem zumindest eine elektrisch leitfähige Trägerschicht und eine Piezokeramikschicht aufweisenden Schichtaufbau ausgegangen, der durch Erhitzen und anschließendes Abkühlen infolge materialbedingt unterschiedlicher Kontraktionseigenschaften zu verschieden stark vorgespannten Schichten oder Lagen (prestressed layers) führt. Die unterschiedliche Vorspannung der Schichten wiederum führt zu einer Ausbiegung des flachen Biegewandlers um eine quer zu dessen Längsseiten verlaufende und parallel zu dessen Schmalseiten liegende Biegeachse.

In einer besonders bevorzugten Ausführungsform sind innerhalb des Ventilgehäuses zwei Biegewandler zueinander im Wesentlichen parallel verlaufend angeordnet. Deren jeweiliges mit einer elektrischen Spannungsquelle verbindbares Anschlussende zur Ventilbetätigung ist wiederum zweckmäßigerweise das gehäusefest gehaltene Ende, während das jeweilige Freiende in Längsrichtung wiederum beweglich gehalten ist. Bezogen auf eine Gehäusemittelachse sind die beiden Biegewandler in Richtung auf den diesen jeweils zugeordneten Ventilkanal konvex gewölbt. Dabei ist im spannungslosen Zustand ein erster Ventilkanal mittels eines von einem ersten Biegewandler getragenen Dichtelements verschlossen, während ein gegenüberliegender zweiter Ventilkanal geöffnet ist. Diesem zweiten Ventilkanal liegt dann ein vom zweiten Biegewandler getragenes Dichtelement beabstandet gegenüber.

Durch Anlegen der Betriebsspannung mit entsprechender Polung werden beide Biegewandler erregt, so dass der erste Ventilkanal geöffnet und der zweite Ventilkanal geschlossen wird. Ein über einen zusätzlichen Einströmkanal in das Ventilgehäuse einströmendes Medium wird somit im Ruhezustand über den zweiten Kanal und im Betriebszustand über den ersten Kanal aus dem Ventilgehäuse herausgeführt. Je nach Betriebsweise kann auch ein über den geöffneten zweiten Ventilkanal einströmendes Medium über den Einströmkanal aus dem Ventilgehäuse abströmen.

Bei Einsatz eines einzelnen Biegewandlers ist dieser im spannungslosen Zustand in Richtung auf einen ersten Ventilkanal konkav gebogen, wobei sich ein diesem gegenüberliegender zweiter Ventilkanal innerhalb des Ventilgehäuses bis in die wirksame Nähe der konkaven Seite des Biegewandlers erstreckt. Insbesondere bei dieser Ausführungsform mit nur einem einzelnen Biegewandler trägt dieser ein beidseitig dessen mittleren Bereiches wirksames Dichtelement.

Nachfolgend werden Ausführungsbeispiele der Erfindung anhand einer Zeichnung näher erläutert. Darin zeigen:
- Fig. 1: in einer Schnittdarstellung eine erste Ausführungsvariante eines piezoelektrisch betätigbaren Ventils mit zwei beidendseitig gehaltenen Biegewandlern,
- Fig. 2: eine zweite Ausführungsvariante des Ventils gemäß Fig. 1,
- Fig. 3: in einer Darstellung gemäß den Figuren 1 und 2 ein piezoelektrisch betätigbares Ventil mit einem einzelnen beidendseitig gehaltenen Biegewandler, und
- Fig. 4: in Darstellungen A und B Versuchsaufbauten eines einseitig bzw. beidseitig gehaltenen piezoelektrischen Biegewandler im erregten und erregungsfreien Zustand.

Dabei sind gleiche Teile in allen Figuren mit den gleichen Bezugszeichen versehen.

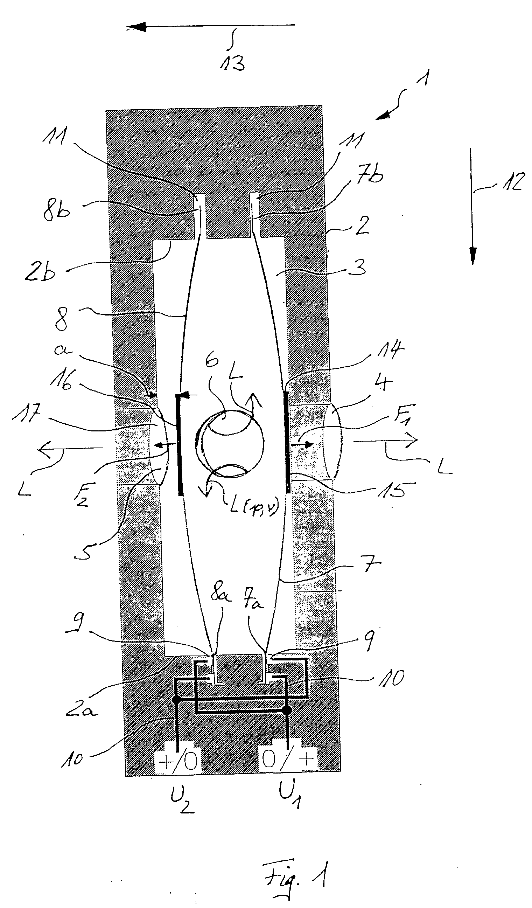

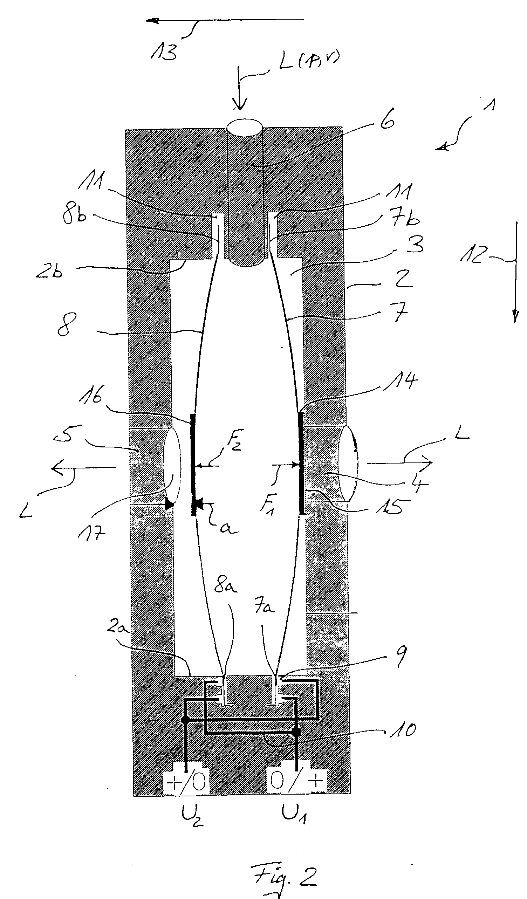

Das piezoelektrisch betätigbare Ventil 1 gemäß den Figuren 1 und 2 weist ein vorzugsweise aus Kunststoff bestehendes und quaderförmiges Ventilgehäuse 2 mit einem ebenfalls quaderförmigen oder auch kreiszylindrischen Innenraum 3 auf. In den Innenraum 3 münden zwei sich diametral gegenüberliegende Ventilkanäle 4 und 5 ein. Ein weiterer in den Innenraum 3 des Ventilgehäuses 2 einmündender Ventil- oder Eintrittskanal 6 verläuft quer zu den beiden Ventilkanälen 4 und 5.

Im Innenraum 3 des Ventilgehäuses 2 sind zwei plättchenförmige Biegewandler 7 und 8 angeordnet. Jeder Biegewandler 7,8 weist ein Anschlussende 7a,8a und ein Freiende 7b,8b auf. Das jeweilige Anschlussende 7a,8a des Biegewandlers 7 bzw. 8 ist im Bereich einer anschlussseitigen Schmalseite 2a des Ventilgehäuses 2 gehalten und dort fixiert. An das jeweilige Anschlussende 7a,8a des Biegewandlers 7 bzw. 8 sind Anschlusskontakte 9 geführt, die mit jeweils einer Spannungsquelle U₁ bzw. U₂ über Anschlussleitungen 10 verbunden sind. Die Anschlussquellen U₁,U₂ liefern eine Gleichspannung von z.B. 200V.

Auf der gegenüberliegenden Gehäuseschmalseite 2b des Ventils 1 liegen die Freienden 7b,8b des jeweiligen Biegewandlers 7 bzw. 8 in Gehäusenuten 11 ein. Innerhalb dieser Gehäusenuten 11 sind die Freienden 7b,8b der Biegewandler 7 bzw. 8 in Wandlerlängsrichtung 12, die auch der Gehäuselängsrichtung entspricht, beweglich gehalten. Die Gehäusenuten 11 bilden dabei seitliche Anschläge für das jeweilige Freiende 7b,8b in bzw. entgegen der durch den Pfeil 13 veranschaulichten Gehäusequerrichtung.

Bei dem im Ausführungsbeispiel dargestellten Ruhe- oder Ausgangszustand sind die Biegewandler 7,8 spannungslos und somit erregungsfrei. In diesem Ruhezustand ist der im Ausführungsbeispiel gemäß den Figuren 1 und 2 rechte Ventilkanal 4 verschlossen. Dazu trägt der Biegewandler 7 im mittleren Bereich der diesem Ventilkanal 4 zugewandten Außenseite ein vorzugsweise aus Kunststoff oder Gummi bestehendes Dichtelement 14. Dieses liegt am Ventilsitz 15 des Ventilkanals 4 an und dichtet diesen gehäuseinnenseitig ab. Die dazu erforderliche Anpresskraft F₁ wird vom Biegewandler 7 selbst dadurch aufgebracht, dass dieser im Ruhezustand in Richtung auf den Ventilsitz 15 konkav gewölbt und dabei durch eine entsprechende Einbaulage blattfederartig vorgespannt ist.

Der dargestellte Biegungs- oder Krümmungsverlauf des jeweiligen Biegewandlers 7,8 wird durch ein spezielles Herstellungsverfahren erreicht, bei dem in nicht näher dargestellter Art und Weise ein Schichtaufbau mit einer elektrisch leitfähigen Trägerschicht, vorzugsweise in Form eines flachen Blechstreifens, und mit einer darauf anhäsiv gehaltenen Piezokeramikschicht durch Erhitzen und anschließendes Abkühlen entlang der Wandlerlängsrichtung 12 vorgespannt werden.

Der dem (linken) Ventilkanal 5 zugeordnete Biegewandler 8, der bezüglich dessen Form und Aufbau dem Biegewandler 7 entspricht, trägt ebenfalls in dessen mittleren Bereich ein Dichtelement 16. Dieses ist im dargestellten geöffneten Zustand des Ventilkanals 5 gegenüber dessen Ventilsitz 17 mit einem Abstand a angeordnet. Auch dieser Biegewandler 8 ist im spannungslosen Ruhezustand in Richtung auf diesen Ventilsitz 17 und damit auf den Ventilkanal 5 konvex gewölbt.

Zum Betrieb des Ventils 1 werden die beiden Biegewandler 7 und 8 bei entsprechender Polung der Spannungsquellen U₁ bzw. U₂ erregt. Dabei bewegen sich beide Biegewandler 7,8 in Richtung oder Biegerichtung des Pfeils 13, so dass das vom Biegewandler 7 getragene Dichtelement 14 vom Ventilsitz 15 abhebt und somit den Ventilkanal 4 öffnet, während das vom Biegewandler 8 getragene Dichtelement 16 gegen den Ventilsitz 17 gepresst wird und somit den Ventilkanal 5 verschließt. Die Freienden 7b und 8b beider Biegewandler 7 bzw. 8 können sich dabei aufgrund deren Halterung innerhalb der Gehäusenuten 11 in Längsrichtung 12 verschieben. Die Freienden 7b und 8b sind dabei derart tief in die Gehäusenuten 11 eingeführt, dass diese bei einer Ausbiegung der Biegewandler 7,8 im erregten Zustand nicht aus den Gehäusenuten 11 heraustreten können.

Während im Ruhezustand aufgrund der Vorspannung des gebogenen Biegewandlers 7 das von diesem getragene Dichtelement 14 bereits mit einer ausreichend hohen Anpresskraft F₁ gegen den Ventilsitz 15 gedrückt wird, wird die zum Verschließen des im Ruhezustand offenen Ventilkanals 5 erforderliche Anpresskraft F₂ durch die beidendseitige Halterung des Biegewandlers 8 in Kombination mit der mittenlagigen Anordnung des Dichtelements 16 erreicht. Grund hierfür ist eine Krafterhöhung infolge einer besonders günstigen Hebelarmwirkung bei konstantem Biegemoment.

Beim Betrieb des im Ausführungsbeispiel als Drei-Wege-Ventil ausgeführten Pneumatikventils 1 wird über den Eintritts- oder Einlasskanal 6 in das Ventilgehäuse 2 mit einem vorgegebenen Druck p und mit einer vorgegebenen Strömungsgeschwindigkeit v einströmende Luft L über den in diesem spannungslosen Ruhezustand geöffneten Ventilkanal 5 aus dem Ventilgehäuse 2 abgeführt. Der Einströmkanal 6 kann dabei gemäß Fig. 1 durch eine Längsseite des Ventilgehäuses 2 auf zumindest annähernd gleicher Höhe der beiden diametral gegenüberliegenden Ventilkanäle 4 und 5 in den Innenraum 3 geführt werden. Alternativ kann gemäß Fig. 2 der Einlasskanal 6 durch die mit den Gehäusenuten 11 versehene Schmalseite 2b des Ventilgehäuses 2 in den Innenraum 3 geführt sein. Bei dieser Ausführungsform verläuft der Einlasskanal 6 zweckmäßigerweise zwischen den beiden Gehäusenuten 11 und mündet somit zwischen den beiden Biegewandlern 7 und 8 in den Innenraum 3 ein.

Zum Umschalten des Ventils 1 werden die beiden Biegewandler 7 und 8 durch Anlegen einer Betriebsspannung U bei entsprechender Polung der Spannungsquellen U₁ und U₂ erregt und in gleicher Richtung (Biegungsrichtung) 13 ausgelenkt. Dabei wird der im Ruhezustand geschlossene Ventilkanal 4 geöffnet, während der im Ruhezustand geöffnete Ventilkanal 5 geschlossen wird. Die über den Einlasskanal 6 in das Ventilgehäuse 2 einströmende Luft L wird somit über den Ventilkanal 4 abgeführt. Durch entsprechende Polung der Spannungsquellen U₁ und U₂ können auch beide Ventilkanäle 4 und 5 geöffnet oder geschlossen werden.

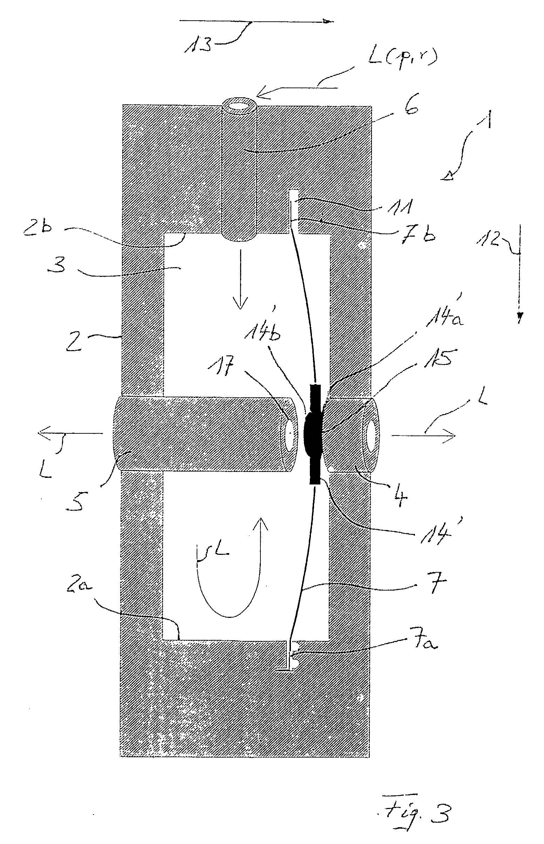

Bei der in Fig. 3 ohne Spannungsanschlüsse 9,10 dargestellten Variante mit einem einzelnen, wiederum beidendseitig im Ventilgehäuse 2 gehaltenen Biegewandler 7 ist dessen mittlerer Bereich im Ausführungsbeispiel im Ruhezustand in Richtung auf den Ventilkanal 4 gewölbt oder gebogen. Der dem Ventilkanal 4 gegenüberliegende Ventilkanal 5 ist im Innenraum 3 in Richtung zum Dichtelement 14' hin verlängert und erstreckt sich somit bis in die wirksame Nähe des Biegewandlers 7. Das auf den Biegewandler 7 aufgesetzte oder aufgebrachte und sowohl auf dessen konvexer als auch auf dessen konkaver Seite wirksame Dichtelement 14' ist zweckmäßigerweise beidseitig gewölbt ausgeführt. Einander entgegengerichtete Dichtwölbungen 14'a,14'b sind dabei zweckmäßigerweise halbkugelförmig ausgebildet. Dadurch wird insbesondere auch bei einer vergleichsweise kleinen lichten Weite oder einem vergleichsweise kleinen Innendurchmesser der Ventilkanäle 4,5 eine besonders zuverlässige Dichtwirkung erzielt.

Beim Betrieb des Pneumatikventils 1 gemäß Fig. 3 wird im spannungslosen Zustand - oder auch bei entsprechender Polung der (nicht dargestellten) Spannung U - mittels des vorgespannten, gebogenen Biegewandlers 7 das Dichtelement 14' gegen den Ventilsitz 15 gepresst und somit der Ventilkanal 4 verschlossen, während der Ventilkanal 5 geöffnet ist. Durch Umpolen der Spannung U werden infolge einer Ausbiegung des Biegewandlers 7 entgegen der dargestellten Biegerichtung 13 der Ventilkanal 5 geschlossen und gleichzeitig der Ventilkanal 4 geöffnet.

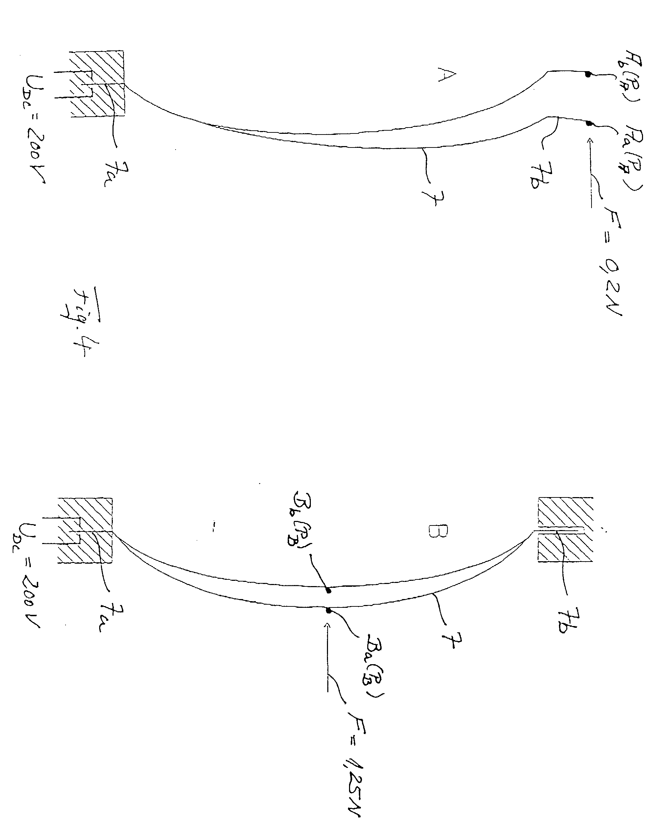

Figur 4 veranschaulicht Versuchsaufbauten A und B mit einem einzelnen anschlussseitig eingespannten Biegewandler 7, wobei die nachfolgenden Ausführungen für den Biegewandler 8 gemäß den Figuren 1 und 2 analog gelten. Während das Freiende 7b des Biegewandlers 7 gemäß dem Versuchen A nach Art eines Auslegers frei beweglich ist, ist dieses Freiende 7b gemäß dem Versuch B lediglich längsverschiebbar gehalten. Bei beiden Versuchen A und B wurde der gleiche Biegewandler 7 eingesetzt, dessen Piezokeramikschicht die Abmessungen 38,00 x 12,70 x 0,20 und dessen Trägerschicht die Abmessungen 63,4 x 13,7 x 0,15 (Länge, Breite und Dicke in mm) aufwies. Messparameter war die erforderliche Rückstellkraft F, um den mit einer Spannung U = 200V(DC) erregten Biegewandler 7 am jeweiligen Punkt P_{A}, P_{B} aus der ausgelenkten Position Aₐ, Bₐ in die erregungsfrei Ruhe- oder Neutralposition A_{b}, bzw. B_{b} zurückzuführen.

Beim Versuch A wurde die Rückstellkraft F am Freiende 7b des Biegewandlers 7 im Messpunkt P_{A} erfasst, während diese beim Versuch B im mittleren Bereich des Biegewandlers 7 im Messpunkt P_{B} ermittelt wurde. Die der Anpress- oder Andruckkraft F_{1,2} entsprechende Rückstellkraft F wurde beim Versuch A mit 0,2N (entspricht 20g) und beim Versuch B mit 1,25N (entspricht 125g) gemessen.

Dies bedeutet, dass durch die erfindungsgemäße Anordnung eines beidendseitig gehaltenen Biegewandlers 7,8 mit in dessen mittleren Bereich angeordnetem Dichtelement 14, 16 innerhalb eines piezoelektrisch betätigten Ventil 1 eine Erhöhung der Kraft F_{1,2} zum Verschließen eines Ventilkanals 4 bzw. 5 gegenüber einem einseitig eingespannten Piezoelement um ein Vielfaches erreicht wird.

### Bezugszeichenliste

- 1: Ventil
- 2: Ventilgehäuse
- 2a,b: Schmalseite
- 3: Innenraum
- 4,5: Ventilkanal
- 6: Eintritts-/Ventilkanal
- 7,8: Biegewandler
- 7a,8a: Anschlussende
- 7b,8b: Freiende
- 9: Anschlusskontakt
- 10: Anschlussleitung
- 11: Gehäusenut
- 12: Wandler-/Gehäuselängsrichtung
- 13: Biege-/Gehäusequerrichtung
- 14: Dichtelement
- 14a,b: Dichtwölbung
- 15: Ventilsitz
- 16: Dichtelement
- 17: Ventilsitz

- a: Abstand
- L: Luft
- F_{1,2}: Anpresskraft

## Patentansprüche

1. Piezoelektrisch betätigbares Ventil (1) mit mindestens einem Ventilkanal (4,5), der mittels eines an einem piezoelektrischen Biegewandler (7,8) gehaltenen Dichtelementes (14,16) verschließbar ist, wobei der ein erstes Ende (7a,8a) und ein zweites Ende (7b,8b) aufweisende Biegewandler (7,8) mit dem ersten Ende (7a,8a) im Ventilgehäuse (2) fixiert ist, und wobei das zweite Ende (7b,8b) des Biegewandlers (7,8) auf der dem ersten Ende (7a,8a) gegenüberliegenden Gehäuseseite (2b) in einer Gehäusenut (11) in Wandlerlängsrichtung (12) beweglich geführt ist.

2. Piezoelektrisch betätigbares Ventil nach Anspruch 1,
dadurch gekennzeichnet,
dass das im Ventilgehäuse (2) fixierte erste Ende (7a,8a) als mit einer elektrischen Spannungsquelle (U_{1,2}) verbindbares Anschlussende des Biegewandlers (7,8) zur Ventilbetätigung ausgeführt ist.

3. Piezoelektrisch betätigbares Ventil nach Anspruch 1 oder 2,
dadurch gekennzeichnet,
dass der Biegewandler (7,8) im spannungslosen Zustand in Richtung auf den Ventilkanal (4,5) konkav gebogen ist.

4. Piezoelektrisch betätigbares Ventil nach einem der Ansprüche 1 bis 3,
dadurch gekennzeichnet,
dass das Dichtelement (14,16) im mittleren Bereich des Biegewandlers (7,8) angeordnet ist.

5. Piezoelektrisch betätigbares Ventil nach einem der Ansprüche 1 bis 4,
dadurch gekennzeichnet,
dass im spannungslosen Zustand ein erster Ventilkanal (4) mittels eines ersten Dichtelements (14) verschlossen ist, das an einem in Richtung auf diesen Ventilkanal (4) konkav gebogen ersten Biegewandler (7) gehalten ist, während ein dem ersten Ventilkanal (4) gegenüberliegender zweiter Ventilkanal (5) geöffnet ist, dem ein zweites Dichtelement (16) beabstandet gegenüberliegt, das an einem in Richtung (13) auf diesen Ventilkanal (5) konkav gebogenen zweiten Biegewandler (8) gehalten ist.

6. Piezoelektrisch betätigbares Ventil nach einem der Ansprüche 1 bis 5,
gekennzeichnet durch
einen quer zu jedem Ventilkanal (4,5) in das Ventilgehäuse (2) einmündenden Einlasskanal (6).

7. Piezoelektrisch betätigbares Ventil nach Anspruch 1,
dadurch gekennzeichnet,
dass bei Einsatz eines einzelnen Biegewandlers (7) dieser im spannungslosen Zustand in Richtung auf einen ersten Ventilkanal (4) konkav und bezogen auf einen diesem gegenüberliegenden zweiten Ventilkanal (5) konvex gebogen ist, wobei sich der zweite Ventilkanal (5) innerhalb des Ventilgehäuses (2) bis in die wirksame Nähe des Biegewandlers (7) erstreckt.

8. Piezoelektrisch betätigbares Ventil nach Anspruche 7,
gekennzeichnet durch
ein beidseitig des mittleren Bereichs des Biegewandlers (7) wirksames Dichtelement (14').

9. Piezoelektrisch betätigbares Ventil nach einem der Ansprüche 1 bis 8,
dadurch gekennzeichnet,
dass das Dichtelement (14') eine auf den jeweiligen Ventilkanal (4,5) gerichtete Dichtwölbung (14a,14b) aufweist.
